# EUROPEAN PATENT SPECIFICATION

(11) **EP 2 305 601 B1**
(45) Date of publication and mention of the grant of the patent: **08.05.2019**
(21) Application number: 09773369.5
(22) Date of filing: 18.06.2009
(51) Int. Cl.: B01J 23/24, B82Y 30/00, B82Y 40/00, H01M 4/92, H01M 4/90, B01J 23/52, B01J 23/70, C01B 32/18, C01B 32/162

(54) **NANOTUBE-NANOHORN COMPOSITE AND PROCESS FOR PRODUCTION THEREOF**
NANORÖHRE-NANOHORN-VERBUNDWERKSTOFF UND HERSTELLUNGSVERFAHREN DAFÜR
COMPOSITE NANOTUBES-NANOCORNETS ET LEUR PROCÉDÉ DE FABRICATION

(30) Priority: 30.06.2008 JP 2008169942
(43) Date of publication of application: 06.04.2011
(73) Proprietor: NEC Corporation, Minato-ku Tokyo 108-8001 (JP)
(72) Inventor: YUGE, Ryota, Tokyo 108-8001 (JP); HATTORI, Sadanori, Tokyo 108-8001 (JP); YUDASAKA, Masako, Tokyo 108-8001 (JP); IIJIMA, Sumio, Tokyo 108-8001 (JP)
(74) Representative: Glawe, Delfs, Moll
(86) International application number: PCT/JP2009/061555
(87) International publication number: WO 2010/001791

(56) References cited:
- EP-A1- 1 434 246
- EP-A1- 1 473 274
- WO-A1-2007/088829
- WO-A1-2007/088829
- JP-A- 2002 326 032
- JP-A- 2005 170 739
- JP-A- 2006 052 115
- JP-A- 2007 007 599
- US-A1- 2007 027 029

## Description

### Technical Field:

The present invention relates to a nanotube-nanohorn complex and a method of manufacturing the same.

### Background Art:

Carbon nanotubes have such characteristics that they have a high aspect ratio, are chemically stable, and are mechanically strong. Therefore, carbon nanotubes have greatly been expected as field emission light-emitting devices. Carbon nanotubes have diligently been studied, for example, as disclosed in Japanese laid-open patent publications Nos. 2001-143645 (Patent Document 1) and 2000-86219 (Patent Document 2).

In most cases where carbon nanotubes are used as field emission elements, for example, as disclosed in Japanese laid-open patent publications No. 2007-103313 (Patent Document 3) and 2007-265749 (Patent Document 4), it has been customary to mix a binder or the like so as to produce paste for application onto an electrode by spraying, screen printing, or the like. However, the dispersibility of carbon nanotubes is so poor that homogeneous paste cannot be obtained. Accordingly, there has been a large problem in uniformity of the light emission.

In recent years, aggregates of carbon nanohorns, which have a horn structure with a sheath structure like a carbon nanotube and a closed end, have been found as disclosed in Japanese laid-open patent publication No. 2002-159851 (Patent Document 5). The unique structure of a carbon nanohorn has industrially attracted attention as a fuel cell or a catalyst carrier for steam reforming to produce hydrogen from hydrocarbon such as methane, as disclosed in Japanese laid-open patent publication No. 2007-7599 (Patent Document 6). Recently, carbon nanohorns have also greatly been expected as field emission elements as disclosed in Japanese laid-open patent publications Nos. 2003-77385 (Patent Document 7) and 2009-076314 (Patent Document 8).

It has been known that carbon nanohorns are nanocarbon having high conductivity because they have a tubular structure. Carbon nanohorns are spherical aggregates having a diameter of 1 nm to 5nm in which the length of a sheath comprising a horn structure is in a range of 30 nm to 200 nm. Although carbon nanohorns have higher dispersibility than carbon nanotubes, the aspect ratio is so low that carbon nanohorns are unsuitable to field emission elements and the like.

International Patent Publication No. 2007/088829 (Patent Document 9) has reported that a carbon nanotube can grow from a catalyst encapsulated in a carbon nanohorn or supported in an outer wall of a carbon nanohorn by a chemical deposition method. However, the size of the catalyst cannot uniformly be dispersed at a high level. Furthermore, it is difficult to grow carbon nanotubes controlled in diameter with high dispersibility.

### Disclosure of Invention:

The invention of the present application has been made under the above circumstances. In order to solve conventional problems, an object of the present invention is to provide a nanotube-nanohorn complex having a high aspect ratio, also having high dispersibility, and being capable of growing carbon nanotubes with controlled diameter because the size of catalysts is determined by the diameter of sheaths of nanohorns.

Specifically, a first invention of this application is a nanotube-nanohorn complex characterized by comprising carbon nanohorns and catalyst fine particles supported within the carbon nanohorns, wherein each of the carbon nanohorns comprises an aperture formed at tips of the carbon nanohorns, each of the catalyst fine particles is fitted and fixed in the aperture in a state in which part of the catalyst fine particle is exposed to an exterior of the carbon nanohorn, and carbon nanotubes are grown from the catalyst fine particles which are exposed from tips of the carbon nanohorns.

Moreover, a second invention of this application is a method of manufacturing a nanotube-nanohorn complex, characterized by comprising a process (a) of forming an aperture in a carbon nanohorn, a process (b) of introducing a catalyst fine particle or a precursor thereof into the carbon nanohorn through the aperture, a process (c) of removing tips of the carbon nanohorn around a portion with which the introduced catalyst fine particle or precursor is brought into contact so as to expose part of the catalyst fine particle or the precursor thereof to an exterior of the carbon nanohorn, and a process (d) of growing a carbon nanotube from the catalyst fine particle or the precursor thereof, which are exposed from the tips of the carbon nanohorns.

Furthermore, a third invention of this application is a field emission element characterized by comprising the nanotube-nanohorn complex of the first invention.

Moreover, a fourth invention of this application is a fuel cell characterized by comprising the nanotube-nanohorn complex of the first invention.

Furthermore, a fifth invention of this application is a catalyst carrier for steam reforming, characterized by comprising the nanotube-nanohorn complex of the first invention.

### (Effect(s) of the Invention)

According to the invention of the present application, there can be provided a nanotube-nanohorn complex having an aspect ratio higher than that of a conventional one, also having high dispersibility, and being capable of growing carbon nanotubes with controlled diameter. Use of such a nanotube-nanohorn complex to produce a field emission element expects uniform light emission from the carbon nanotubes controlled in diameter.

Furthermore, since the nanotube-nanohorn complex is a complex of nanotubes and nanohorns, the nanotubes are moderately dispersed on a surface of an electrode. Therefore, the electric field is likely to concentrate. Accordingly, the nanotube-nanohorn complex is optimal for a field emission device with high luminance.

### Brief Description of Drawings:

Fig. 1 is a diagram showing an overview of an example of a nanotube-nanohorn complex 1 according to the present invention.
Fig. 2A is a diagram showing a method of manufacturing the nanotube-nanohorn complex 1 according to the present invention.
Fig. 2B is a diagram showing a method of manufacturing the nanotube-nanohorn complex 1 according to the present invention.
Fig. 2C is a diagram showing a method of manufacturing the nanotube-nanohorn complex 1 according to the present invention.
Fig. 2D is a diagram showing a method of manufacturing the nanotube-nanohorn complex 1 according to the present invention.
Fig. 3 is a diagram simulating a TEM (transmission electron microscope) photograph of catalyst-carried carbon nanohorns produced according to the present invention, in which Fe catalysts were exposed at tips of the carbon nanohorns.
Fig. 4A is a diagram simulating an electron micrograph of nanotube-nanohorn complexes produced according to the present invention.
Fig. 4B is a diagram simulating an electron micrograph of nanotube-nanohorn complexes produced according to the present invention.
Fig. 4C is a diagram simulating an electron micrograph of nanotube-nanohorn complexes produced according to the present invention.
Fig. 5A is a Raman spectrum of nanotube-nanohorn complexes produced with a catalyst of Fe according to the present invention, in which the illustrated temperature represents the CVD temperature.
Fig. 5B is a Raman spectrum of nanotube-nanohorn complexes produced with a catalyst of Fe according to the present invention, in which the illustrated temperature represents the CVD temperature.
Fig. 6A is a Raman spectrum of nanotube-nanohorn complexes produced with catalysts of Fe, Co, CoMo, and Gd according to the present invention, in which the illustrated temperature represents the CVD temperature.
Fig. 6B is a Raman spectrum of nanotube-nanohorn complexes produced with catalysts of Fe, Co, CoMo, and Gd according to the present invention, in which the illustrated temperature represents the CVD temperature.
Fig. 7 is a graph showing the current density of electrons emitted from an electron emission source produced in the example so as to correspond to the intensity of the electric field, in which NTNH, MWNT, and CNH represent nanotube-nanohorn complexes, multilayered nanotubes, and carbon nanohorns, respectively.

### Description of Reference Numerals:

- 1: nanotube-nanohorn complex
- 100: carbon nanohorn
- 101: aperture
- 102: encapsulated substance

### Mode(s) for Carrying Out the Invention:

The invention of the present application has features as described above. An embodiment of the present invention will be described below.

First, an overview of a structure of a nanotube-nanohorn complex 1 according to an embodiment will be described.

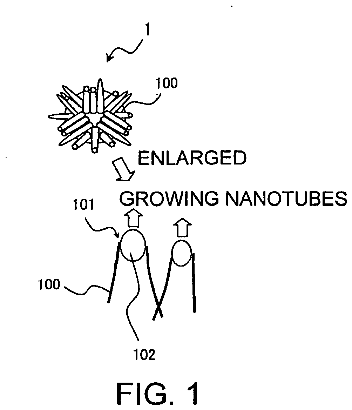

Fig. 1 is a schematic view showing an example of the nanotube-nanohorn complex 1 according to the present invention.

As shown in Fig. 1, the nanotube-nanohorn complex 1 comprises a plurality of carbon nanohorns 100, which forms a spherical aggregate.

Apertures 101 are formed in tips of at least part of the carbon nanohorns 100. Catalyst fine particles 102, which will be described later, are fitted in the apertures 101 in a state such that part of the catalyst fine particles 102 is exposed to the exterior of the carbon nanohorns 100.

Catalyst fine particles 102 are supported at tips of the carbon nanohorns 100 in a state such that part the catalyst fine particles 102 is exposed to the exterior of the carbon nanohorns 100.

Furthermore, carbon nanotubes, which are not shown in the drawings, have grown from the catalyst fine particles 102.

Next, an overview of a manufacturing process of the nanotube-nanohorn complex 1 according to the present invention will be described.

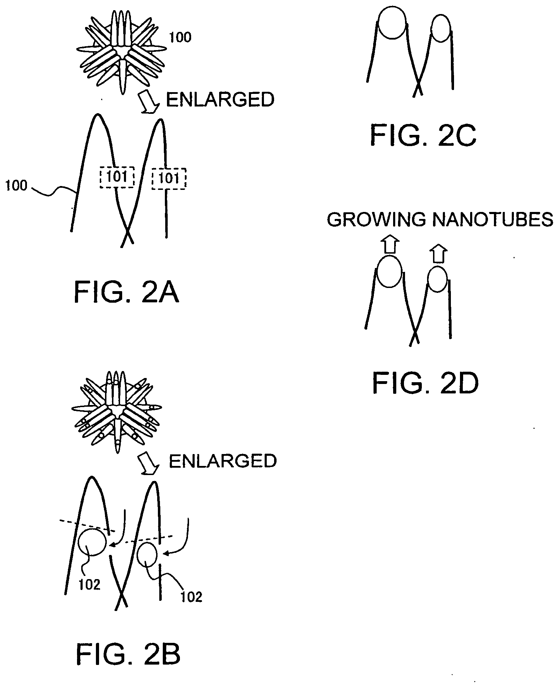

Figs. 2A to 2D are diagrams schematically showing an overview of a manufacturing process of the nanotube-nanohorn complex 1 according to the present invention.

The manufacturing process according to the present invention is divided into four processes (1) to (4) and will be described below.
(1) Apertures are formed in carbon nanohorns.
   In a method of manufacturing a nanotube-nanohorn complex 1 according to the present invention, as shown in Fig. 2A, an oxidation treatment is first performed to produce oxidized aperture carbon nanohorns. At that time, openings are formed at portions having a five-membered ring or a seven-membered ring on side surfaces or tips of carbon nanohorns 100. Apertures 101 are thus formed.
(2) Catalyst fine particles or precursors thereof are introduced into the carbon nanohorns through the apertures.
   Next, as indicated by arrows in Fig. 2B, encapsulated substances 102 are taken as catalyst fine particles or precursors thereof into the carbon nanohorns 100 through the apertures 101. Specifically, the encapsulated substances 102 are sublimated, so that they are directly introduced into the carbon nanohorns 100. Alternatively, the encapsulated substances 102 are introduced into the carbon nanohorns 100 in a state in which they are dissolved in a solvent.
   For example, the encapsulated substances 102 comprise a catalyst substance or a precursor thereof that uses a metal such as Fe, Ni, Co, Pt, Au, Cu, Mo, W, or Mg, or an alloy including Fe, Ni, Co, Pt, Au, Cu, Mo, W, or Mg.
(3) As shown in Fig. 2C, the carbon nanohorns 100 are subjected to a heat treatment in the air or the like around a temperature at which burning starts by a catalytic action at portions at which the introduced catalyst fine particles or precursors thereof are brought into contact with the carbon nanohorns 100. Thus, a carbon layer at the tips of the carbon nanohorns are removed by using a catalyst effect of the encapsulated substances, so that part of the catalyst fine particles or precursors thereof is exposed to the exterior of the carbon nanohorns while the catalysts are fixed by sheaths of the carbon nanohorns. At that time, portions around the encapsulated substances are burned. Thus, the carbon nanohorns 100 are burned to some extent. Therefore, the sheaths of the carbon nanohorns 100 are shortened, and the apertures 101 are enlarged.
(4) As shown in Fig. 2D, the samples produced as described above are placed in, for example, an electric furnace so as to grow carbon nanotubes from the catalysts at the tips of the carbon nanohorns 100 by a chemical vapor deposition (CVD) method.

Thus, a nanotube-nanohorn complex 1 is manufactured.

The carbon nanohorns 100 used as a starting substance are a spherical aggregate of nanohorns having a diameter of 1 nm to 5 nm with a tip of each horn being directed to outer sides of the aggregate. An aggregate having a diameter of 30 nm to 150 nm can be used. The size of the apertures can be controlled by various oxidation conditions in order to form fine holes (the apertures 101) in the carbon nanohorns 100. In a case of oxidation with a heat treatment under an oxygen atmosphere, the size of the holes in the carbon nanohorns 100 can be controlled by changing an oxidation temperature. Holes having a diameter of 0.3 nm to 1 nm can be formed at a temperature ranging from 350°C to 550°C. Furthermore, holes can be formed by a treatment with an acid or the like as disclosed in Japanese patent application No. 2001-294499 (Japanese laid-open patent publication No. 2003-95624). For example, holes having a diameter of 1 nm can be formed at 110°C in 15 minutes with a nitric acid solution, and holes having a diameter of 1 nm can be formed at 100°C in 2 hours with hydrogen peroxide.

For removing the tips of the carbon nanohorns 100 that have encapsulated the catalyst and the like, an appropriate temperature range is from 200°C to 400°C, and an appropriate concentration of an oxygen gas atmosphere is 30 vol% or less. In this case, if the temperature is 200°C or less, the catalytic action of the encapsulated substances cannot be utilized, so that the carbon layer of the tips cannot be removed. If the temperature is 400°C or more, the size of the holes of the carbon nanohorns is unfavorably increased by oxidation, causing the catalyst to be separated from the nanohorns. Furthermore, the oxygen concentration of 30 vol% or more is also unfavorable for the same reasons as described above.

Moreover, in order to remove the tips of the nanohorns with an oxidation treatment in an acid solution, it is preferable to perform the treatment at a room temperature with a concentration of 30 vol% or less. With a high concentration (more than 30 vol%), the oxidation unfavorably proceeds such as to enlarge the holes of the carbon nanohorns and thus cause the catalyst to be separated from the nanohorns.

Various substances, such as a well-known substance having a function of generating nanotubes, may be used for a substance supported and encapsulated as the encapsulated substance 102 in the carbon nanotubes. Examples of a metal of such a substance include Fe, Ni, Co, Pt, Mo, Al, W, and Mg and alloys containing Fe, Ni, Co, Pt, Mo, Al, W, or Mg as described above. The compound may be in the form of well-known inorganic acid salt or organic acid salt, complex, organic metal compound, or the like. Oxides of the aforementioned metals are preferable for an inorganic substance. Organic functional molecules such as metal-encapsulated fullerene and metal complexes such as ferrocene, phthalocyanine, and cisplatin are preferable for an organic substance. If an atmosphere for introducing those substances is in a vapor phase, a pressure of 1 atmosphere (101325 Pa) or less is preferable. The size and amount of the substance introduced can be controlled by changing the amount of introduction, the temperature, the period of time, and the like. The amount of introduction is preferably up to about 80 weight % with respect to the amount of nanocarbons. The temperature at the time of introduction is preferably in a range of about a room temperature to about 1800°C. The period of time may be up to about 48 hours. In a liquid phase, the size and amount of the substance introduced can be controlled by changing the kind of a solvent, the pH and concentration of a solution, the temperature, the period of time, and the like. At that time, the concentration may be up to a saturation concentration of a solvent. The temperature is preferably in a range of about a room temperature to about 300°C. The period of time may be up to about 200 hours.

Single-layer, double-layer, and triple-layer carbon nanotubes can selectively be produced by using the aforementioned catalyst metal or compound as the encapsulated substance 102 and changing the CVD reaction conditions. Furthermore, the diameter can also be controlled. For example, double-layer carbon nanotubes can primarily be grown by controlling the catalyst size in a range of 3 nm to 10 nm in a case of a single metal of Fe, Ni, or Cr or an alloy of Fe, Ni, or Cr.

In the chemical vapor deposition method (CVD method), carbon nanohorns that support a catalyst metal or a compound thereof can be disposed on a substrate by spraying or the like, or can be used such as to float or transfer in a gas.

In the CVD reaction, hydrocarbon compound, as a carbon source compound, such as methane, ethane, ethylene, acetylene, or benzene, alcohol such as methanol or ethanol, CO, and the like are introduced into a reaction system and heated to a temperature ranging from 400°C to 1200°C in the presence of argon, as an atmosphere gas, an inert gas such as nitrogen, or a mixed gas of the atmosphere gas, the inert gas, and hydrogen.

Thus, according to the present embodiment, the nanotube-nanohorn complex 1 includes the carbon nanohorns 100, the apertures 101 formed in the carbon nanohorns 100, the catalyst fine particles 102 provided within the apertures 101 in a state in which part of the catalyst fine particles 102 is exposed to the exterior of the carbon nanohorns 100, and carbon nanotubes that have grown from the catalyst fine particles 102.

Accordingly, the nanotube-nanohorn complex 1 has an aspect ratio higher than that of a conventional one and also has high dispersibility. Furthermore, carbon nanotubes can be grown with controlled diameter.

### (Examples)

Examples will be shown below, and the present invention will be described in greater detail along with those examples. As a matter of course, the present invention is not limited by the following examples.

### (Example 1)

Nanotube-nanohorn complexes according to the present invention were manufactured, and field emission characteristics were evaluated.

### (Formation of apertures in carbon nanohorns and metal encapsulation)

Formation of apertures in carbon nanohorns (CNH) was performed by increasing the temperature to 500°C in dry air by 1°C/min and spontaneously cooling. The resultant product is hereinafter referred to as CNHox. At that time, the flow rate of air was 200 ml/min. After that, metal encapsulation was performed in the following manner: First, iron acetate (50 mg) and CNHox (50 mg) were mixed in an ethanol solution of 20 ml. The mixture was agitated at a room temperature for about 24 hours. Subsequently, the solution was filtered twice by using a filter. Then vacuum drying was conducted for 24 hours. The contained solvents and the like were evaporated and completely removed.

Another sample of catalyst-encapsulated carbon nanohorns that had encapsulated a metal was also produced in a similar manner with use of Co acetate, Gd acetate, Mo acetate, and Co acetate mixture.

### (Exposure of tips of catalyst in catalyst-encapsulated carbon nanohorns)

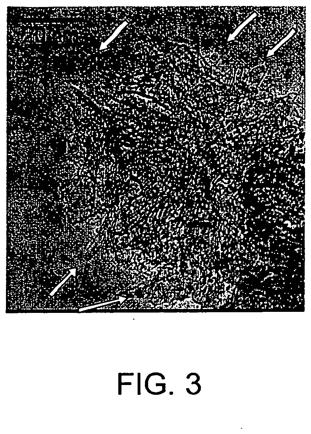

CNHox that had encapsulated iron acetate, which is hereinafter referred to as Fe@CNHox, was heated to 350°C at a temperature increasing rate of 10°C/min in an electric furnace in which air flowed at 200 ml/min. Then it was left for cooling. Fig. 3 shows electron microscope results at the time. The black portion represents iron fine particles. The upper limit of the size was mostly determined by the size of the sheaths and was in a range of about 1 nm to about 3 nm. Furthermore, as can be seen from arrows of Fig. 3, the catalyst metal was exposed at the tips of the sheaths of the nanohorns.

### (Production of nanotube-nanohorn complexes by CVD method)

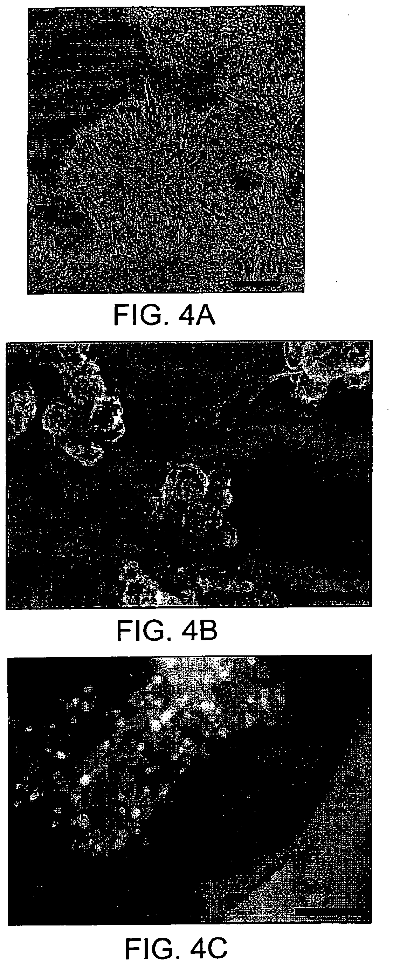

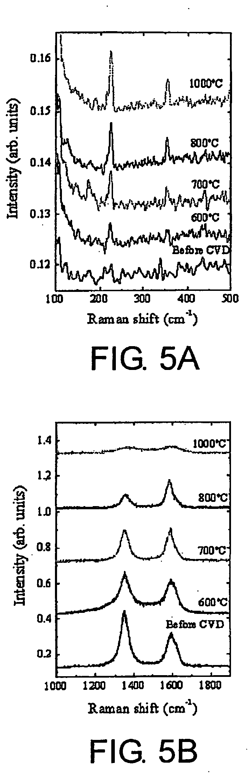

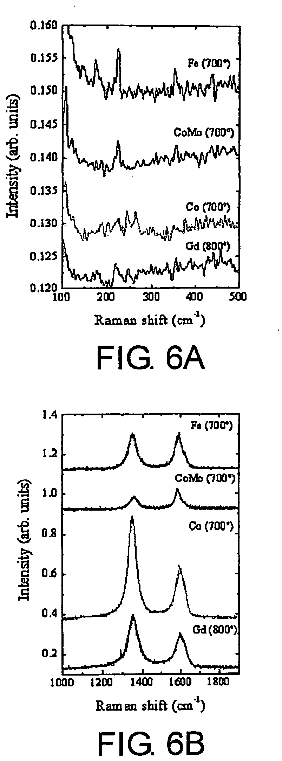

Fe@CNHox produced in the above method was placed in a boat made of alumina, heated to 400°C in a flow of a mixed gas of argon and hydrogen (500 ml/min of Ar and 50 ml/min of hydrogen), and reduced for 30 minutes. Then it was heated to 700°C in a flow of argon. Next, an argon gas was bubbled in ethanol, and nanotubes were grown in a mixed gas of argon and ethanol for 20 minutes. Figs. 4A, 4B, and 4C show electron micrographs of the resultant sample. It is seen from Figs. 4A, 4B, and 4C that nanotubes had grown from the catalysts on the nanohorns. The generated nanotubes included single-layer nanotubes and double-layer nanotubes. Under the aforementioned conditions, single-layer nanotubes were seen more than double-layer nanotubes. The Raman results of samples obtained by changing the growth temperature are shown (in Figs. 5A and 5B). As a result, it is seen that the amount of nanotubes increased as the growth temperature was increased and that an amorphous phase was formed at a high temperature. With regard to other catalysts, growth of nanotubes was also attempted by using a CVD method. Figs. 6A and 6B show the results. Nanotubes grew in the examples of CoMo and Co other than Gd.

### (Field emission characteristics of nanotube-nanohorn complexes)

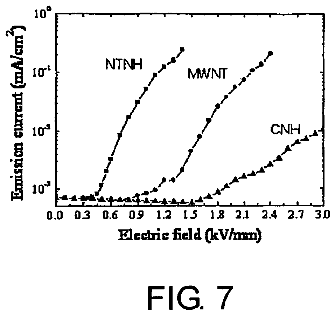

Ultrasonic dispersion was conducted on the resultant samples (200 mg) in α-terpineol (15 ml) for 30 minutes. A cellulose-type organic binder of 200 mg and a glass frit of 400 mg were mixed into the dispersion, and ultrasonic dispersion was conducted for 30 minutes. Paste was screen-printed on a glass substrate on which ITO (Indium-Tin-Oxide) had been sputtered so as to have a thickness of about 100 µm. Then a heat treatment was performed at 500°C in nitrogen to remove the organic binder. For comparison purposes, pasting and production of an electrode were conducted in the same manner as described above with use of multilayered nanotubes and carbon nanohorns. The current-voltage characteristics of a cathode were measured at a degree of vacuum of 10⁻⁶ Torr (133.322 × 10⁻⁶ Pa). Fig. 7 shows the measurement results of the field emission characteristics of nanotube-nanohorn complexes (NT/NH), multilayered nanotubes (MWNT), and carbon nanohorns (CNH). It can be seen that a potential at which an electric field is emitted in the nanotube-nanohorn complexes was lower than those of MWNT and CNH.

It is seen from the above results that a nanotube-nanohorn complex according to the present invention has excellent field emission characteristics as compared to multilayered nanotubes and carbon nanohorns.

The above embodiment and examples have described with regard to the case in which the nanotube-nanohorn complex is used as a material for a field emission element. The present invention is not limited to such a case and is applicable to any structure using a nanotube-nanohorn complex, such as a fuel cell or a catalyst carrier for steam reforming to produce hydrogen from hydrocarbon such as methane.

## Claims

1. A nanotube-nanohorn complex **characterized by** comprising:
carbon nanohorns; and
catalyst fine particles supported within the carbon nanohorns,
wherein each of the carbon nanohorns comprises an aperture formed at tips of the carbon nanohorns,
each of the catalyst fine particles is fitted and fixed in the aperture in a state in which part of the catalyst fine particle is exposed to an exterior of the carbon nanohorn, and
carbon nanotubes are grown from the catalyst fine particles which are exposed from tips of the carbon nanohorns.

2. The nanotube-nanohorn complex as recited in claim 1, **characterized in that** the catalyst fine particles comprise Fe, Ni, Co, Pt, Au, Cu, Mo, W, or Mg, a precursor thereof, or an alloy thereof.

3. A method of manufacturing a nanotube-nanohorn complex, the method comprising:
a process (a) of forming an aperture in a carbon nanohorn;
a process (b) of introducing a catalyst fine particle or a precursor thereof into the carbon nanohorn through the aperture;
a process (c) of removing tips of the carbon nanohorn around a portion with which the introduced catalyst fine particle or precursor is brought into contact so as to expose part of the catalyst fine particle or the precursor thereof to an exterior of the carbon nanohorn; and
a process (d) of growing a carbon nanotube from the catalyst fine particle or the precursor thereof, which are exposed from the tips of the carbon nanohorns.

4. The method of manufacturing a nanotube-nanohorn complex as recited in claim 3, **characterized in that** the process (c) comprises a step of oxidizing and removing the carbon nanohorn around the portion with which the catalyst fine particle or precursor thereof in the carbon nanohorn is brought into contact so as to expose the part of the catalyst fine particle or precursor thereof to the exterior of the carbon nanohorn, and growing the carbon nanotube from a surface of the catalyst.

5. The method of manufacturing a nanotube-nanohorn complex as recited in claim 4, **characterized in that** the process (c) of oxidizing and removing the carbon nanohorn is conducted by a heat treatment at a temperature ranging from 200°C to 400°C under an atmosphere having an oxygen concentration of 30 vol% or less.

6. The method of manufacturing a nanotube-nanohorn complex as recited in claim 4, **characterized in that** the process (c) of oxidizing and removing the carbon nanohorn comprises an oxidation treatment of the carbon nanohorn in an oxidative solution including an oxidant at a concentration of 30 vol% or less and having a temperature ranging from a room temperature to 100°C to expose the part of the catalyst fine particle or precursor thereof to the exterior of the carbon nanohorn.

7. The method of manufacturing a nanotube-nanohorn complex as recited in any one of claims 3 to 6, **characterized in that** the process (b) comprises introducing Fe, Ni, Co, Pt, Au, Cu, Mo, W, or Mg, as the catalyst fine particle, or a precursor thereof, or an alloy thereof.

8. The method of manufacturing a nanotube-nanohorn complex as recited in any one of claims 3 to 6, **characterized in that** the process (d) comprises growing the carbon nanotube from the catalyst fine particle exposed to the exterior of the carbon nanohorn with use of a carbon source compound under an atmosphere of an inert gas or a mixed gas atmosphere of an inert gas and hydrogen at a temperature ranging from 350°C to 1000°C by a chemical vapor deposition method.

9. A field emission element **characterized by** comprising the nanotube-nanohorn complex as recited in any one of claims 1 or 2.

10. A fuel cell **characterized by** comprising the nanotube-nanohorn complex as recited in any one of claims 1 or 2.

11. A catalyst carrier for steam reforming, **characterized by** comprising the nanotube-nanohorn complex as recited in any one of claims 1 or 2.

## Patentansprüche

1. Nanorohr-Nanohorn-Komplex, **gekennzeichnet durch**:
Kohlenstoff-Nanohörner und
feine Katalysatorpartikel, die innerhalb der Kohlenstoff-Nanohörner aufgenommen sind,
wobei jedes der Kohlenstoff-Nanohörner eine Öffnung an den Spitzen der Kohlenstoff-Nanohörner aufweist,
wobei jedes der feinen Katalysatorpartikel in die Öffnung eingepasst und in einem Zustand fixiert ist, in dem ein Teil des feinen Katalysatorpartikels nach außen des Kohlenstoff-Nanohorns freiliegt und
Kohlenstoff-Nanoröhren von den feinen Katalysatorpartikeln gezogen werden, die an den Spitzen der Kohlenstoff-Nanohörner freiliegen.

2. Nanorohr-Nanohorn-Komplex nach Anspruch 1, **dadurch gekennzeichnet, dass** die feinen Katalysatorpartikel Fe, Ni, Co, Pt, Mo, W oder Mg oder ein Vorprodukt davon oder eine Legierung damit aufweisen.

3. Verfahren zur Herstellung eines Nanorohr-Nanohorn-Komplexes, wobei das Verfahren aufweist:
einen Prozess (a) zur Bildung einer Öffnung in einem Kohlenstoff-Nanohorn,
einen Prozess (b) der Einbringung eines feinen Katalysatorpartikels oder eines Vorprodukts davon in das Kohlenstoff-Nanohorn durch die Öffnung,
einen Prozess (c) der Entfernung der Spitzen der Kohlenstoff-Nanohörner um einen Teil in dem das eingebrachte feine Katalysatorpartikel oder das Vorprodukt in Kontakt gebracht wird, um so einen Teil des feinen Katalysatorpartikels oder des Vorprodukts davon nach außen des Kohlenstoff-Nanohorns freizulegen, und
einen Prozess (d) des Ziehens eines Kohlenstoff-Nanorohres aus dem feinen Katalysatorpartikel oder seinem Vorprodukt, das von den Spitzen der Kohlenstoff-Nanohörner freiliegt.

4. Verfahren zur Herstellung eines großen Nanorohr-Nanohorn-Komplexes nach Anspruch 3, **dadurch gekennzeichnet, dass** der Prozess (c) einen Schritt der Oxidation und der Entfernung des Kohlenstoff-Nanohorns um den Teil aufweist, mit dem das feine Katalysatorpartikel oder sein Vorprodukt in dem Kohlenstoff-Nanohorn in Kontakt gebracht wird, umso den Teil des feinen Katalysatorpartikels oder seines Vorprodukts nach außen des Kohlenstoff-Nanohorns freizulegen, und Ziehen des Kohlenstoff-Nanorohres aus der Oberfläche des Katalysators.

5. Verfahren der Herstellung eines Nanorohr-Nanohorn-Komplexes nach Anspruch 4, **dadurch gekennzeichnet, dass** der Prozess (c) der Oxidation und der Entfernung des Kohlenstoff-Nanohorns durch eine Wärmebehandlung bei einer Temperatur im Bereich von 200 °C bis 400 °C unter einer Atmosphäre mit einer Sauerstoffkonzentration von 30 Volumenprozent oder weniger durchgeführt wird.

6. Verfahren der Herstellung eines Nanorohr-Nanohorn-Komplexes nach Anspruch 4, **dadurch gekennzeichnet, dass** der Prozess (c) der Oxidation und der Entfernung des Kohlenstoff-Nanohorns eine Oxidationsbehandlung des Kohlenstoff-Nanohorns in einer Oxidationslösung einschließlich eines Oxidationsmittels bei einer Konzentration von 30 Volumenprozent oder weniger und bei einer Temperatur von Raumtemperatur bis zu 100 °C durchgeführt wird, um den Teil des feinen Katalysatorpartikels oder seines Vorprodukts nach außen des Kohlenstoff-Nanohorns freizulegen.

7. Verfahren der Herstellung eines Nanorohr-Nanohorn-Komplexes nach einem der Ansprüche 3 bis 6, **dadurch gekennzeichnet, dass** der Prozess (b) die Einbringung von Fe, Ni, Co, Pt, Mo, W oder Mg als das feine Katalysatorpartikel oder eines Vorprodukts davon oder einer Legierung damit umfasst.

8. Verfahren der Herstellung eines Nanorohr-Nanohorn-Komplexes nach einem der Ansprüche 3 bis 6, **dadurch gekennzeichnet, dass** der Prozess (d) das Ziehen des Kohlenstoff-Nanorohres aus dem feinen Katalysatorpartikel umfasst, das nach außen des Kohlenstoff-Nanohorns freiliegt, unter Verwendung einer Kohlenstoffquellen-Verbindung unter einer Atmosphäre eines Edelgases oder einer gemischten Gasatmosphäre eines Edelgases und Wasserstoff bei einer Temperatur im Bereich von 350 °C bis 1000 °C durch ein Verfahren der chemischen Dampfabscheidung.

9. Feld-Emissionselement, **dadurch gekennzeichnet, dass** es den Nanorohr-Nanohorn-Komplex nach einem der Ansprüche 1 oder 2 aufweist.

10. Brennstoffzelle, **dadurch gekennzeichnet, dass** sie den Nanorohr-Nanohorn-Komplex nach einem der Ansprüche 1 oder 2 aufweist.

11. Katalysatorträger zur Dampfreformierung, **dadurch gekennzeichnet, dass** er den Nanorohr-Nanohorn-Komplex nach einem der Ansprüche 1 oder 2 aufweist.

## Revendications

1. Complexe nanotube-nanocornet **caractérisé en ce qu'**il comprend :
des nanocornets de carbone ; et
des fines particules de catalyseur supportées au sein de nanocornets de carbone,
dans lequel chacun des nanocornets de carbone comprend une ouverture formée aux extrémités des nanocornets de carbone, chacune des fines particules de catalyseur est ajustée et fixée dans l'ouverture dans un état dans lequel une partie de la fine particule de catalyseur est exposée à un extérieur du nanocornet de carbone, et
on fait croître des nanotubes de carbone à partir de fines particules de catalyseur qui sont exposées à partir des extrémités des nanocornets de carbone.

2. Complexe nanotube-nanocornet selon la revendication 1, **caractérisé en ce que** les fines particules de catalyseur comprennent Fe, Ni, Co, Pt, Au, Cu, Mo, W, ou Mg, un précurseur de ceux-ci, ou un alliage de ceux-ci.

3. Procédé de fabrication d'un complexe nanotube-nanocornet, le procédé comprenant :
un processus (a) de formation d'une ouverture dans un nanocornet de carbone ;
un processus (b) d'introduction d'une fine particule de catalyseur ou d'un précurseur de celle-ci dans le nanocornet de carbone par l'ouverture ;
un processus (c) consistant à enlever les extrémités du nanocornet de carbone autour d'une portion avec laquelle la fine particule de catalyseur introduite ou le précurseur est mis(e) en contact de manière à exposer une partie de la fine particule de catalyseur ou du précurseur de celle-ci à un extérieur du nanocornet de carbone ; et
un processus (d) consistant à faire croître un nanotube de carbone à partir de la fine particule de catalyseur ou du précurseur de celle-ci, qui sont exposés à partir des extrémités des nanocornets de carbone.

4. Procédé de fabrication d'un complexe nanotube-nanocornet selon la revendication 3, **caractérisé en ce que** le processus (c) comprend une étape consistant à oxyder et à enlever du nanocornet de carbone autour de la portion avec laquelle la fine particule de catalyseur ou le précurseur de celle-ci dans le nanocornet de carbone est mis(e) en contact de manière à exposer la partie de la fine particule de catalyseur ou du précurseur de celle-ci à l'extérieur du nanocornet de carbone, et à faire croître le nanotube de carbone à partir d'une surface du catalyseur.

5. Procédé de fabrication d'un complexe nanotube-nanocornet selon la revendication 4, **caractérisé en ce que** le processus (c) consistant à oxyder et à enlever du nanocornet de carbone est réalisé par un traitement thermique à une température allant de 200 °C à 400 °C sous une atmosphère ayant une concentration en oxygène de 30 % en volume ou moins.

6. Procédé de fabrication d'un complexe nanotube-nanocornet selon la revendication 4, **caractérisé en ce que** le processus (c) consistant à oxyder et à enlever du nanocornet de carbone comprend un traitement d'oxydation du nanocornet de carbone dans une solution oxydante comprenant un oxydant à une concentration de 30 % en volume ou moins et ayant une température allant de la température ambiante à 100 °C pour exposer la partie de la fine particule de catalyseur ou du précurseur de celle-ci à l'extérieur du nanocornet de carbone.

7. Procédé de fabrication d'un complexe nanotube-nanocornet selon l'une quelconque des revendications 3 à 6, **caractérisé en ce que** le processus (b) comprend l'introduction de Fe, Ni, Co, Pt, Au, Cu, Mo, W, ou Mg, en tant que fine particule de catalyseur, ou d'un précurseur de ceux-ci, ou d'un alliage de ceux-ci.

8. Procédé de fabrication d'un complexe nanotube-nanocornet selon l'une quelconque des revendications 3 à 6, **caractérisé en ce que** le processus (d) comprend la croissance du nanotube de carbone à partir de la fine particule de catalyseur exposée à l'extérieur du nanocornet de carbone avec utilisation d'un composé source de carbone sous une atmosphère d'un gaz inerte ou une atmosphère de gaz mixte d'un gaz inerte et d'hydrogène à une température allant de 350 °C à 1000 °C par un procédé de dépôt chimique en phase vapeur.

9. Elément à émission de champ **caractérisé en ce qu'**il comprend le complexe nanotube-nanocornet tel que mentionné dans l'une quelconque des revendications 1 ou 2.

10. Pile à combustible **caractérisée en ce qu'**elle comprend le complexe nanotube-nanocornet tel que mentionné dans l'une quelconque des revendications 1 ou 2.

11. Support de catalyseur pour le reformage à la vapeur, **caractérisé en ce qu'**il comprend le complexe nanotube-nanocornet tel que mentionné dans l'une quelconque des revendications 1 ou 2.
